## Europäisches Patentamt
## European Patent Office
## Office européen des brevets

(11) Veröffentlichungsnummer: **0 132 641 B1**

# EUROPÄISCHE PATENTSCHRIFT

(45) Veröffentlichungstag der Patentschrift:
03.02.88

(51) Int. Cl.⁴: **H 04 N 9/00**

(21) Anmeldenummer: **84107747.2**

(22) Anmeldetag: **04.07.84**

(54) **Einrichtung zur Umsetzung von Farbfernsehbildern in vergröberte Rastergrafiken mit begrenzter Rasterauflösung und mit begrenzter Anzahl von gleichzeitig benutzbaren Farbtönen.**

(30) Priorität: **20.07.83 DE 3326069**

(43) Veröffentlichungstag der Anmeldung:
**13.02.85 Patentblatt 85/7**

(45) Bekanntmachung des Hinweises auf die Patenterteilung:
**03.02.88 Patentblatt 88/5**

(84) Benannte Vertragsstaaten:
**AT BE CH DE FR GB IT LI LU NL SE**

(56) Entgegenhaltungen:
**DE-A-3 041 786**
**DE-A-3 107 652**
**DE-A-3 309 847**
**US-A-4 204 227**

(73) Patentinhaber: **DORNIER SYSTEM GmbH, Postfach 1360, D-7990 Friedrichshafen (DE)**

(72) Erfinder: **Zimmermann, Rolf, Dr., Spiegelberg 3, D-7997 Immenstaad (DE)**

(74) Vertreter: **Landsmann, Ralf, Dipl.- Ing., Kleeweg 3, D-7990 Friedrichshafen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 132 641 B1

## Beschreibung

Die Erfindung betrifft eine Einrichtung zur Umsetzung von Farbfernsehbildern in vergröberte Rastergrafiken mit begrenzter Rasterauflösung und mit begrenzter Anzahl von gleichzeitig benutzbaren Farbtönen, enthaltend einen oder mehrere analog-Digitalumsetzer, einen Bildpunktspeicher und ein Prozessorsystem.

Bei der Erstellung von farbigen Rastergrafiken zur Wiedergabe auf Bildschirmgeräten mit begrenzter Rasterauflösung und mit begrenzter Anzahl von gleichzeitig benutzbaren Farbtönen (z. B. bei Bildschirmtext im CEPT-Standard mit frei definierbaren Zeichen und frei definierbaren Farbtönen) besteht häufig der Wunsch, vorhandene Farbfernsehbilder oder vorhandene ·Vorlagen mit möglichst wenig manuellem Aufwand und in möglichst kurzer Zeit in Farbrastergrafiken umzusetzen.

Aus der Praxis sind Verfahren bekannt, welche Grafiken mit Hilfe von Tastaturen oder Grafiktabletts mit erheblichem Arbeitsaufwand punktweise aufbauen. Andere Verfahren benutzen optische Grafikabtaster, die speziell zu diesem Zweck mit speziellen Farbstiften und auf einem speziellen Papier fester Größe gezeichnete Vorlagen in Rastergrafiken umwandeln. Bisher bekannte Verfahren mit Farbfernsehkameras setzen ebenfalls voraus, daß die Vorlagen nur die auch für die Wiedergabe vorgesehenen Farben besitzen.

Zum Beispiel ist aus der DE-OS 31 07 652 ein Verfahren und eine Anordnung zum Darstellen von grafischen Mustern bekannt, bei dem die Muster bereits in gleicher Form als grafische Muster auf einer Vorlage abgebildet und in den entsprechenden (dort 8) Farben dargestellt sind, optoelektronisch abgetastet und in einem vorgegebenen groben Raster dargestellt werden. Das Raster wird bei der Anwendung für Bildschirmtext-Blockgrafik aus sechs Grafikelementen gebildet, die zu Zeichenfeldern zusammengefaßt sind. Ein aus der US-PS 42 04 227 bekannter Fernsehbild-Kompressor beschreibt die Errechnung von Farbtonmittelwerten zur Reduzierung der Anzahl von Bildpunkten, wobei nach Bestimmung der erforderlichen Bildpunktauflösung für die zu den einzelnen Bildpunkten zugehörigen Flächen eines Fernsehbildes Farbtonmittelwerte erzeugt und dem jeweiligen Bildpunkt zugeordnet werden.

Davon ausgehend ist es Aufgabe der Erfindung, eine Einrichtung zu schaffen, mit welcher eine weitgehend automatische Umsetzung von beliebigen Farbfernsehbildern (z. B. von Bildplatten, Videobandgeräten oder aus laufenden Fernsehsendungen) oder von mit einer Farbfernsehkamera erfaßten beliebigen Vorlagen in vergröberte Rastergrafiken mit begrenzter Rasterauflösung und mit begrenzter Anzahl von gleichzeitig benutzbaren Farbtönen möglich ist. Insbesondere sollen damit beliebige Bildvorlagen in die beim Bildschirmtext-CEPT-Standard möglichen Punktraster für frei definierte Zeichen, in Blockgrafik- und in Schräggrafikzeichen umgesetzt werden, wobei je nach Zeichentyp nur 2, 4 oder 16 Farbtöne verwendbar sind, die zuvor aus einem Vorrat von 4096 Farbtönen ausgezählt werden können.

Erfindungsgemäß sind zur Lösung der gestellten Aufgabe die kennzeichnenden Merkmale von Anspruch 1 vorgesehen. Vorteilhafte Weiterbildungen ergeben sich aus den Unteransprüchen.

Der Vorteil der Erfindung besteht z. B. bei einer Anwendung für die Erzeugung von Bildschirmtext-Grafiken darin, daß vorhandene Fernsehbilder oder Vorlagen, wie Fotos, Zeichnungen und ähnliches in unterschiedliche Formen von Rastergrafiken des Bildschirmtext-CEPT-Standards mit Mosaikgrafik-, Schräggrafik- und DHCS-Zeichen unterschiedlicher Typen mit einem Minimun an manueller Arbeit umwandelbar sind.

Der CEPT-Standard enthält unter anderem:
- 63 Mosaikgrafikzeichen im Raster 2 x 3 Teilflächen je Zeichenstelle,
- 56 Schräggrafikzeichen,
- 94 frei definierbare Zeichen (DRCS-Zeichen), die punktweise definierbar sind, unterschiedlich viele benutzbare Farbtöne (2, 4 oder 16) und unterschiedliche Raster von 6 x 5 bis 12 x 12 Teilflächen je Zeichenstelle besitzen.

Typische Anwendungen der Einrichtung sind zum Beispiel:
- Umsetzung von nichtlateinischen Schriftzeichen (z. B. griechische Buchstaben), Kleinsymbolen und andere in DRCS-Einzelzeichen,
- Umsetzung, von Logos, Piktogrammen, größeren Symbolen, speziellen Schriftzeichen (z. B. japanische Zeichen) und andere in mehrere zusammengehörige DRCS-Zeichen,
- Umsetzung von Zeichnungen, Kurvendiagrammen und andere in zusammengehörige Zwei- oder Vierfarb-DRCS-Zeichen, einschließlich Einbeziehung von Mosaikgrafik- und Schräggrafikzeichen,
- Umsetzung von Fotos, flächigen Grafiken und sonstigen "Bildern" in zusammengehörige Zwei-, Vier- oder Sechzehnfarb-DHCS-Zeichen, einschliesslich Einbeziehung von Mosaikgrafik- und Schräggrafikzeichen.

Ein Ausführungsbeispiel ist folgend beschrieben und durch Skizzen erläutert.

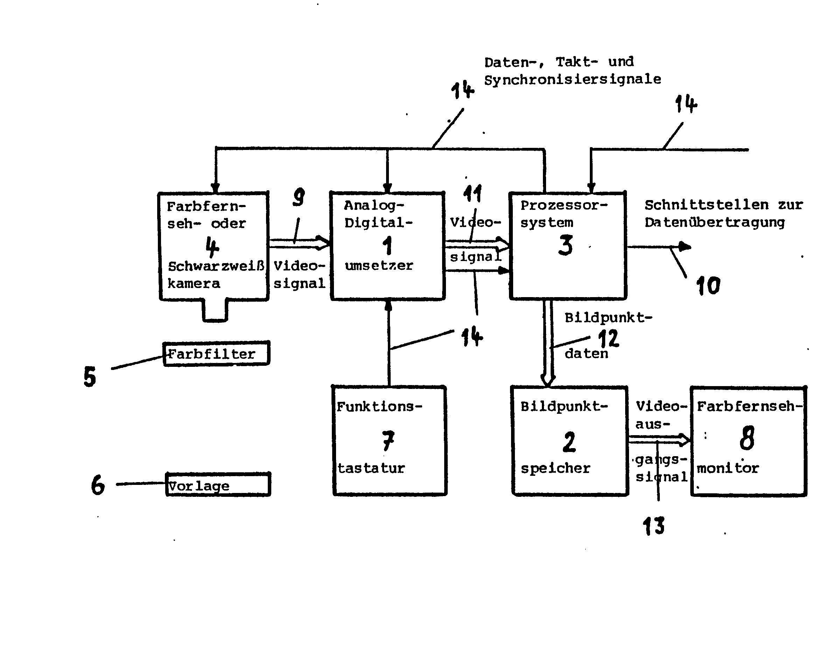

Figur 1 zeigt die prinzipielle Anordnung der Einrichtung. Die Einrichtung setzt sich zusammen aus den Komponenten Analog-Digitalumsetzer 1, Bildpunktspeicher 2, Prozessorsystem 3, Funktionstastatur 7 und Farbfernseh-Monitor 8. Das Farbfernsehbild liegt entweder bereits als Videosignal 9 vor (z. B. von Bildplatten, Videobandgeräten oder laufenden Fernsehsendungen) oder eine Vorlage 6 wird durch eine Farbfernseh- oder Schwarzweißkamera 9 mit vorgeschalteten Farbfiltern 5 in beliebigem Maßstab erfasst.

Das Videosignal 9 gelangt in den Analog-Digitalmesser 1 und wird, nach erfolgter Digitalisierung (digitalisiertes Videosignal 11), über das Prozessorsystem 3 als Bildpunktdaten 12 in den Bildpunktspeicher 2 geleitet und darin punktweise gespeichert (z. B. 3 x 4 bit für jeden Punkt eines Farbbildes). In dieser Form kann das gespeicherte Bild (Video-Ausgangssignal 13) auf dem Farbfernseh-Monitor 8 wiedergegeben werden. Mit Hilfe der Funktionstastatur 7 steuert ein Bearbeiter bereichsweise oder zeichenstellenweise die Umsetzung in DRCS-Zeichen und andere Grafiksymbole. Auf dem Farbfernseh-Monitor 8 ersetzen diese Zeichen dann das gespeicherte Originalbild. Außerdem ist jederzeit die alleinige Darstellung des kompletten gespeicherten Originalbildes oder der bis dahin fertiggestellten Zeichen auf dem Farbfernseh-Monitor 8 möglich. Nach Abschluß der Umsetzung können die Zeichen erneut komplett an andere Bildschirmtext-Geräte, - Arbeitsplätze oder -Zentralen übertragen werden. (Schnittstellen zur Datenübertragung 10). Zur Steuerung des Ablaufs der Umsetzung ist die Übertragung sonstiger Daten-, Takt- und Synchronisiersignale 14 zwischen den einzelnen Funktionsblöcken erforderlich.

Die hohe Punktzahl des CEPT-Standards in horizontaler Richtung (12 Punkte je Zeichenstelle entsprechen etwa 12 Mega-Punkte/sec) stellt sehr hohe Anforderungen an die Farbfernsehkamera und den Farbfernseh-Monitor, die sogar mit üblichen Studio-Farbfernsehkameras und Studio-Farbfernseh-Monitoren nicht erfüllbar sind und daher sehr teure Sonderlösungen erfordern würden. Die vorgeschlagene Einrichtung arbeitet daher grundsätzlich in zweifacher Vergrösserung in horizontaler und vertikaler Richtung. Die Einrichtung kann daher mit der halben Bildpunktrate und mit normalen preisgünstigen Farbfernsehkameras und Farbfernseh-Monitoren arbeiten. Außerdem erleichtert die vergrößerte Darstellung die Bildbearbeitung erheblich.

Zur Wiedergabe der aufgenommenen Farbbilder wird der Farbfernseh-Monitor 8 verwendet. Der kleinste DRCS-Einzelpunkt wird dabei in doppelter Breite und über zwei Fernsehzeilen wiedergegeben, wobei die gesamte Niedergabe auf dem Arbeitsmonitor ebenfalls einer Darstellung in doppelter Größe entspricht.

Die Wiedergabe ist folgendermaßen umschaltbar:
- gespeichertes Original
- nur die bis dahin umgesetzten Zeichen (Farben entsprechend der Bearbeitung),
- bis dahin umgesetzte Zeichen, der Rest im Original.

Außerdem sind zur Bearbeitung folgende Raster überlagerbar:
- Zeichenstellenraster für 10 oder 12 Zeilen Zeichenstellenhöhe,
- Schreibmarke für aktuelle Zeichenstelle,
- Schreibmarke für aktuellen Bildpunkt.
Auf dem Farbfernseh-Monitor 8 werden in der Dialogzeile zusätzlich die aktuelle Farbpalette und einige Hilfsinformationen dargestellt, wie beispielsweise die Code-Nummer des DRCS-Zeichens oder Codes der Farben.

Die Funktionstastatur 7 besitzt Tasten zur Eingabe für folgende Parameter:
- elektronisches punktweises Verschieben der Vorlage im Feinbereich,
- Auswahl der beschriebenen Aufnahme- und Wiedergabearten,
- Markieren eines rechteckigen Feldes mit Block-Anfangs- und Endezeichen zur Begrenzung des umzuwandelnden Bildausschnitts,
- Einschalten, Ausschalten und Bewegen der Schreibmarkendarstellungen (gegebenenfalls nur innerhalb eines markierten Bereichs),
- Festlegung der 16 frei definierbaren Farben durch Übernahme von Farbtönen aus dem Original mit Hilfe der Bildpunkt-Schreibmarke,
- Festlegung des Grafiktyps (Mosaikgrafik, Schräggrafik, DRCS in unterschiedlicher Auflösung/Farbe) an der aktuellen Zeichenstelle,
- Auswahl der Farben für Modes mit zwei, vier oder sechzehn Farben,
- Auslösen der Umwandlung zeichenstellenweise oder im kompletten markierten Bereich und Übertragung der Codes.

Kernstück der Einrichtung ist die Bildverarbeitungseinheit, bestehend aus dem Prozessorsystem 3 und dem Bildpunktspeicher 2. Sie enthält unter anderem die Einzelkomponenten:
- Speicher für das digitalisierte Original,
- Speicher für die Rastergrafik,
- Ausgangsschaltung zur Kombination von Original-Farbfernsehbild und Rastergrafik,
- Mikroprozessor mit Schnittstellen für Datenübertragung 10 und Funktionstastatur 7.

Die Umsetzung z. B. einer Bildvorlage in eine Rastergrafik kann mit dieser Einrichtung in der beispielhaft beschriebenen Ausführungsform für Bildschirmtext in folgenden Schritten vorgenommen werden:
- Start des Betriebs mit Auswahl des 12- oder 10-Zeilen-Modes und (abschaltbare) Einblendung des entsprechenden Zeichenstellenrasters,
- Grobpositionierung der Vorlage und der Farbfernsehkamera, Einstellung von Helligkeit und Kontrast, sowie Einstellung eines Zoom-Maßstabs bei gleichzeitiger Wiedergabe des digitalisierten Farbfernsehsignals auf dem Farbfernseh-Monitor 8,
- Feinpositionierung mit Hilfe von Funktionstasten,
- eventuelles Markieren eines Bereichs zur Begrenzung des umzuwandelnden Bildausschnitts,
- Festlegung einzelner oder aller 16 frei definierbaren Farben durch Positionierung der Zeichenstellen-Schreibmarke und der Bildpunkt-Schreibmarke auf Bildpunkte der zu übernehmenden Farbe, Anzeige dieser Farben in einer Dialogzeile,
- eventuell manuelle Korrektur der übernommenen Farben,

- zeichenstellen- oder blockweise Festlegung des gewünschten DRCS- oder Grafiktyps, bei Zwei- oder Vierfarb-DRCS Festlegung der gewünschten Farben, automatische Umsetzung der Bildpunkte des Originals in das gewünschte DRCS- oder Grafikzeichen mit automatischer Umsetzung der Originalfarben in die aktuell festgelegten möglichen Farben aufgrund des minimalen Abstands im R (Rot)-G (Grün)- B (Blau)-Vektorraum,

- Wiedergabe der umgesetzten DRCS- oder Grafikzeichen auf dem Farbfernseh-Monitor 8,

- eventuelle Übersetzung der Codes zu anderen Geräten oder Bildschirmtext-Zentralen.

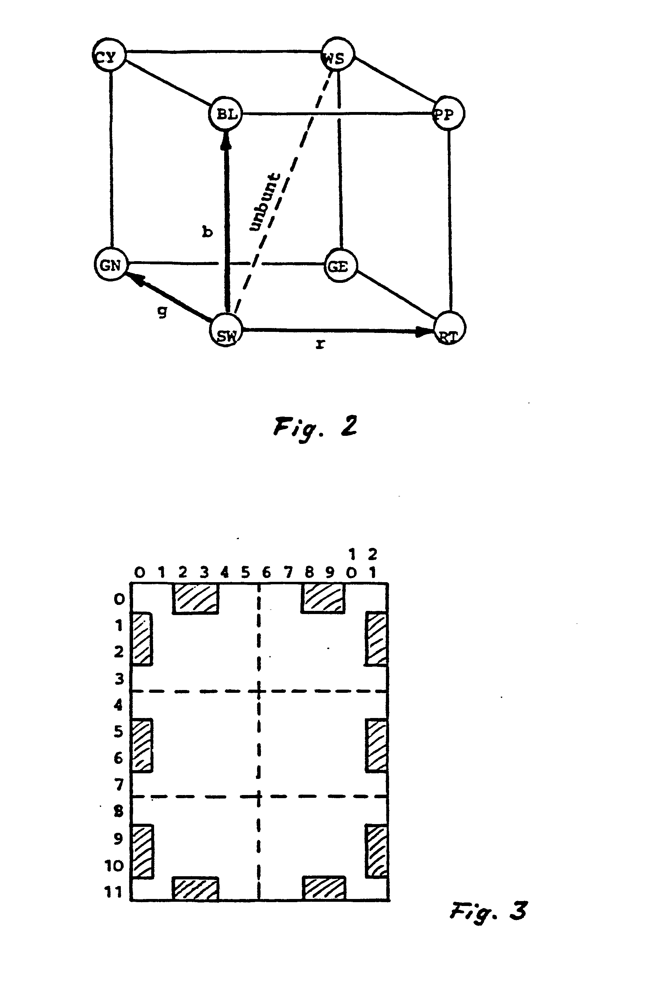

Die Umsetzung der Bildpunkte wird mit Umsetzalgorithmen am Beispiel eines in Figur 2 gezeigten Farbwürfels erläutert. Hierbei wird dem Farbton jedes Rasterpunktes (bei grober Auflösung dem Farbtonmittelwert mehrerer Rasterpunkte) die ähnlichste der je nach Mode erlaubten Btx-Farben zugeordnet. Die Ähnlichkeit wird in einem dreidimensionalen Vektorraum mit den Achsen r (rot), g (grün) und b (blau) ermittelt. Der Originalfarbton bzw. Farbtonmittelwert ist ein Vektor mit den Komponenten R, G, B. Diesem Vektor RGB wird derjenige Vektor RiGiBi der jeweils erlaubten und zuvor festgelegten 2, 4 oder 16 Btx-Farben zugeordnet, der den geringsten räumlichen Abstand a zum Vektor des Originalfarbtons besitzt, also

$$a_{min} = min \sqrt{((R-Ri)^2 + (G-Gi)^2 + (B-Bi)^2)},$$

wobei i die je nach Umsetzmode erlaubten und zuvor festgelegten 2, 4 oder 16 Btx-Farbtöne durchläuft. Zur Berechnung des minimalen Abstands $a_{min}$ werden für jeden Btx-Farbvektor i die Differenzen (R-Ri) usw. gebildet (jeweils 15 mögliche Absolutbeträge 0 bis 15), mit Hilfe einer Tabelle quadriert und aufsummiert. Zugeordnet wird der Farbvektor i mit der geringsten Quadratsumme, die Wurzelrechnung kann dabei entfallen.

Die Umsetzung in Schräggrafikzeichen ist wesentlich komplizierter, weil die Farbtonwerte des Fernsehbildes nicht nur in zwei Btx-Farben umgesetzt werden müssen sondern auch in bestimmte Formen. Ausserdem kann nicht jede Rasterpunktanordnung des Fernsehbildes sinnvoll in Schräggrafikzeichen umgesetzt werden. In vielen Fällen ist die Umsetzung in Blockgrafiksymbole korrekter.

Die Umsetzung in Schräggrafikzeichen erfolgt daher in zwei Stufen:

- Muster-Erkennungsverfahren zur Zuordnung der 56 möglichen Schräggrafikzeichen,

- bei nicht sinnvoller Zuordnung erfolgt die Umsetzung in ein Blockgrafikzeichen.

Hierzu wird als Muster-Erkennungsverfahren ein sehr eineinfaches "Sonden"-Verfahren verwendet, das eindeutige Umsetzungen erlaubt. Bei dem gewählten Verfahren werden an jeder Zeichenstelle für 10 Sondenbereiche (je 2 am oberen und unteren Rand, je 3 am linken und rechten Rand) die Farbtonmittelwerte gebildet und der Vordergrundfarbe (1) oder der Hintergrundfarbe (0) zugeordnet, wie Figur 3 zeigt.

Es entsteht also ein 10 bit langes Binärwort, das jedoch nur bei genau 56 Bitmustern in Schräggrafikzeichen umsetzbar ist. Alle anderen Bitmuster werden verworfen und es erfolgt dann eine Umsetzung in Blockgrafikzeichen.

## Patentansprüche

1. Einrichtung zur Umsetzung von Farbfernsehbildern in vergröberte Rastergrafiken mit begrenzter Rasterauflösung und mit begrenzter Anzahl von gleichzeitig benutzbaren Farbtönen, enthaltend einen oder mehrere Analog-Digitalumsetzer (1), einen Bildpunktspeicher (2) und ein Prozessorsystem (3), <u>dadurch gekennzeichnet</u>, daß das Prozessorsystem (3) nach Festlegung der Rasterauflösung aus der zu jedem Rasterpunkt gehörenden Fläche eines Original-Fernsehbildes einen Farbtonmittelwert der in dieser Fläche vorhandenen Fernsehbildpunkte errechnet und nach Festlegung der benutzbaren Rastergrafik-Farbtöne jeden der Farbtonmittelwerte denjenigen der jeweils erlaubten Rastergrafik-Farbtöne zuordnet, der in einem dreidimensionalen Vektorraum mit den Achsen r (rot), g (grün) und b (blau) den geringsten Abstand

$$a_{min} = min \sqrt{((R-Ri)^2 + (G-Gi)^2 + (B-Bi)^2)}$$

zum jeweiligen Farbtonmittelwert besitzt, wobei dieser Farbtonmittelwert der Vektor RGB ist, die benutzbaren Rastergrafik-Farbtöne die Vektoren RiBiGi sind und die Komponenten aller Vektoren unkorrigierte oder nach einer Gammafunktion korrigierte R-, G- und B-Anteile von Farbfernsehsignalen (9) sind.

2. Einrichtung nach Anspruch 1, dadurch gekennzeichnet, daß Vorlagen (6) zur Umsetzung von einer Farbfernsehkamera oder einer Schwarzweiß-Fernsehkamera (4) mit vorschaltbaren Rot-Grün-Blau-Farbfiltern (5) erfaßt werden und in vergrößertem Maßstab (z. B. zweifach) abgetastet werden.

3. Einrichtung nach einem der Ansprüche 1 und 2, dadurch gekennzeichnet, daß auf dem zur Wiedergabe verwendeten Farbfernseh-Monitor (8) die bis zum Zeitpunkt der Wiedergabe umgewandelten Bereiche als Farbrastergrafik und die restlichen Bereiche wahlweise neutral oder als Originalbild wiedergegeben werden.

4. Einrichtung nach einem der Ansprüche 1 bis 3, dadurch gekennzeichnet, daß auf dem zur Wiedergabe verwendeten Farbfernseh-Monitor (8) zujedem Zeitpunkt auch das gesamte Originalbild und bei Wiedergabe in doppelter Größe zeilenweise wechselnd das Originalbild und die bis dahin umgesetzten Bereiche der Farbrastergrafik wiedergebbar sind.

5. Einrichtung nach einem der Ansprüche 1 bis 4, dadurch gekennzeichnet, daß die Umwandlung für einen im Originalbild zuvor markierten Bereich automatisch und einheitlich unter Berücksichtigung der zuvor festgelegten Rasterauflösung und der benutzbaren Rastergrafik-Farbtöne erfolgt.

6. Einrichtung nach einem der Ansprüche 1 bis 5, dadurch gekennzeichnet, daß die Umwandlung schrittweise für Teilflächen von z. B. der Größe einer Zeichenstelle erfolgt, wobei für jede Teilfläche die Rasterauflösung und der Vorrat der benutzbaren Rastergrafik-Farbtöne neu festlegbar oder veränderbar sind.

7. Einrichtung nach einem der Ansprüche 1 bis 6, dadurch gekennzeichnet, daß die Festlegung der Rasterauflösung und der benutzbaren Rastergrafik-Farbtöne, die Markierung von Bildbereichen und die Auswahl von Darstellungsarten und Betriebsabläufen über die Funktionstastatur (7) erfolgt.

8. Einrichtung nach einem der Ansprüche 1 bis 7, dadurch gekennzeichnet, daß die Umsetzung in Schräggrafikzeichen durch ein Muster-Erkennungsverfahren (Sondenverfahren) erfolgt, wobei an jeder Zeichenstelle für die an deren Rande liegenden Sondenbereiche die Farbtonmittelwerte gebildet und der Vordergrundfarbe 1 oder der Hintergrundfarbe 0 zugeordnet werden, das entstehende Binärwort bei bestimmten Bitmustern in Schräggrafikzeichen umgesetzt wird und alle anderen Bitmuster verworfen werden.

9. Einrichtung nach einem der Ansprüche 1 bis 8, dadurch gekennzeichnet, daß bei nicht möglicher Umsetzung in Schräggrafikzeichen die Umsetzung in Blockgrafikzeichen erfolgt.

## Claims

1. Apparatus for converting colour television pictures into coarse screen graphics with limited screen definition and with a limited number of shades of colour which can be used simultaneously, containing one or several analog to digital converters (1), a picture element store (2) and a processor system (3), characterised in that the processor system (3) after the fixing of the screen definition calculates from the zone of an original television picture associated with each picture element, a shade mean value of the television picture points present in this zone and after the useable screen graphics shades have been determined, associates with each of the shade means values, the screen graphics shade of those permitted in each case, which has the shortest distance

$$a_{min} = min \sqrt{((R-Ri)^2 + (G-Gi)^2 + (B-Bi)^2)}$$

in a three-dimensional vector space with the axes r (red), g (green) and b (blue) in relation to the corresponding shade mean value, whereby this shade mean value corresponds to the vector RGB, the useable screen graphics shades correspond to the vectors RiBiGi and the components of all vectors correspond to uncorrected R, G, and B portions of colour television signals (9) or these portions of the signals corrected according to a gamma function.

2. Apparatus according to claim 1, characterised in that material (6) for conversion is picked up by a colour television camera or a black and white television camera (4) with red-green-blue colour filters (5) which can be connected in series and scanned to an enlarged scale (e.g. x 2).

3. Apparatus according to one of claims 1 and 2, characterised in that the areas converted up to the time of reproduction are reproduced as colour screen graphics and the remaining areas either neutrally or as an original picture as required on the colour television (8) used for reproduction.

4. Apparatus according to one of claims 1 to 3, characterised in that at any time the complete original picture and with reproduction in double size on a line basis alternately the original picture and the areas of the colour screen graphics which have been converted up to that time can also be reproduced on the colour television monitor (8) used for reproduction.

5. Apparatus according to one of claims 1 to 4, characterised in that the conversion for an area which has been marked before in the original picture is effected automatically and in a uniform manner whilst taking into account the screen definition and the useable screen graphics shades which had been fixed before.

6. Apparatus according to one of claims 1 to 5, characterised in that the conversion is effected in steps for part surfaces of for example the size of a character position, whereby the screen definition and the store of useable screen graphics shades can be restipulated or changed for each part surface.

7. Apparatus according to one of claims 1 to 6, characterised in that the screen definition and the useable screen graphics shades are fixed, the picture areas are marked and the types of display and operating sequences are chosen with the control keyboard (7).

8. Apparatus according to one of claims 1 to 7, characterised in that conversion into slant graphics characters is carried out by means of a sample recognition process (sensor process) whereby at each character position the shade means values are formed and the foreground colour 1 or the background colour 0 are allocated for the sensor areas located at the edges of this position, the binary word created is converted into slant graphics characters with certain bit patterns and all other bit patterns are rejected.

9. Apparatus according to one of claims 1 to 8, characterised in that if conversion into slant graphics characters is not possible, conversion into block graphics characters is effected.

## Revendications

1. Dispositif pour la conversion d'images de télévision en couleurs en représentations graphiques à grosse trame avec définition limitée de l'image et nombre limité des nuances de couleurs utilisables simultanément, comprenant un ou plusieurs convertisseurs analogiques-numériques (1), une mémoire d'éléments d'image (2) et une unité centrale de traitement (3), <u>caractérisé en ce</u> que, après la détermination de la définition de l'image, l'unité centrale de traitement (3) calcule, à partir de la surface d'une image originale de télévision en couleurs associée à chaque point du réseau, une valeur moyenne de nuance de couleur des éléments d'image de télévision contenus dans cette surface et, après la détermination des nuances de couleurs utilisables pour les caractères graphiques matriciels, associe à chacune des valeurs moyennes de nuance de couleur celle des nuances de couleurs autorisées respectivement pour les caractères graphiques matriciels qui dans un espace vectoriel tridimensionnel avec les axes r (rouge), g (vert) et b (bleu), se trouve à la distance minimale

$$a_{min} = min \sqrt{((R-Ri)^2 + (G-Gi)^2 + (B-Bi)^2)},$$

de la valeur moyenne de nuance de couleur respective, le vecteur RGB étant cette valeur moyenne de nuance de couleur, les vecteurs RiGiBi étant les nuances de couleurs utilisables pour des caractères graphiques matriciels et les composantes de tous les vecteurs représentant des composantes R, G et B de signaux de télévision en couleurs (9) non corrigées ou corrigées d'après une fonction gamma.

2. Dispositif selon la revendication 1, caractérisé en ce que des modèles (6) sont enregistrés, pour la conversion, par une caméra de télévision en couleurs ou en noir et blanc (4) avec des filtres colorés rouge-vert-bleu (5) intercalables et balayés à une échelle agrandie (par exemple double).

3. Dispositif selon l'une des revendications 1 ou 2, caractérisé en ce que sur le moniteur de télévision couleur (8) utilisé pour la reproduction les zones converties jusqu'au moment de la reproduction sont rendues en tant que représentations graphiques matricielles et que les zones restantes sont reproduites, au choix, sous forme de représentations neutres ou d'image originale.

4. Dispositif selon l'une quelconque des revendications 1 à 3, caractérisé en ce que, sur le moniteur de télévision couleur (8), il est possible, à chaque instant, de reproduire également l'ensemble de l'image originale et, en cas de reproduction en double grandeur, alternativement, ligne par ligne, l'image originale et les zones de la représentation graphique matricielle converties jusque-là.

5. Dispositif selon l'une quelconque des revendications 1 à 4, caractérisé en ce que, pour une zone marquée préalablement dans l'image originale, la conversion se fait de manière automatique et uniforme en tenant compte de la définition de l'image préalablement fixée et des nuances de couleurs utilisables pour des représentations graphiques matricielles.

6. Dispositif selon l'une quelconque des revendications 1 à 5, caractérisé en ce que, pour des surfaces partielles, par exemple de la taille d'un emplacement de caractère, la conversion se fait pas à pas, la définition de l'image et la réserve de nuances de couleurs utilisables pour des représentations graphiques matricielles pouvant être redéterminées pour chaque surface partielle.

7. Dispositif selon l'une quelconque des revendications 1 à 6, caractérisé en ce que la détermination de la définition de l'image et des nuances de couleurs utilisables pour des représentations graphiques matricielles, le marquage de zones d'image et la sélection des modes de représentation et de déroulement des processus sont effectués par l'intermédiaire du clavier de fonction (7).

8. Dispositif selon l'une quelconque des revendications 1 à 7, caractérisé en ce que la conversion en caractères graphiques obliques est réalisée au moyen d'un procédé de reconnaissance de modèle (procédé à sonde), les valeurs moyennes des couleurs étant formées à chaque emplacement de caractère pour les zones particulières situées aux bords de celui-ci et associées à la couleur du premier plan 1 ou à la couleur du fond 0, le mot binaire généré étant converti en caractères graphiques obliques pour certaines configurations binaires alors que toutes les autres configurations binaires sont rejetées.

9. Dispositif selon l'une quelconque des revendications 1 à 8, caractérisé en ce que, lorsqu'une conversion en caractères graphiques obliques est impossible, la conversion se fait en caractères graphiques par bloc.

Daten-, Takt- und
Synchronisiersignale

**14**

**14**

Farbfern-
seh- oder
**4**
Schwarzweiß
kamera

**9**

Videosignal

Analog-
Digital-
**1**
umsetzer

**11**

Videosignal

Prozessorsystem
**3**

Schnittstellen zur
Datenübertragung

**10**

Bildpunkt-

**12**

daten

**14**

Farbfilter

**5**

**6**

Vorlage

Funktions-
**7**
tastatur

Bildpunkt-
aus-
**2**
speicher

Videoaus-

·gangssignal

Farbfernseh-
**8**
monitor

**13**

0 132 641

Fig. 2

Fig. 3